# EUROPÄISCHE PATENTANMELDUNG

(11) **EP 3 713 187 A1**
(43) Veröffentlichungstag der Anmeldung: **23.09.2020**
(21) Anmeldenummer: 19163803.0
(22) Anmeldetag: 19.03.2019
(51) Int. Cl.: H04L 29/06

(54) **VERFAHREN ZUR ÜBERTRAGUNG VON DATENPAKETEN**

(71) Anmelder: Siemens Aktiengesellschaft, 80333 München (DE)
(72) Erfinder: Falk, Rainer, 85586 Poing (DE); Fischer, Kai, 85598 Baldham (DE); Fries, Steffen, 85598 Baldham (DE); Furch, Andreas, 85354 Freising (DE); Heintel, Markus, 81377 München (DE); Papagudi Subrahmanyam, Niranjana, 81829 München (DE); Sel, Tolga, 80809 München (DE)

(57) **Zusammenfassung**

Die Erfindung betrifft ein Verfahren zur Übertragung von Datenpaketen (10) über ein Netzwerk von einem Sender (S) zu einem Empfänger (E) über eine Kommunikationsverbindung (K) bestehend aus mindestens einem Übertragungsabschnitt (TSi), über den das Datenpaket (10) von einem Sendeknoten (Ti) zu einem Empfangsknoten (Ri) übermittelt wird, mit folgenden Schritten für mindestens einen Übertragungsabschnitt (TSi):
- Zuordnen (S1) einer ersten Sicherheitsinformation (SIi), die Information über eine bei der Übertragung des Datenpakets (10) über einen benachbarten Übertragungsabschnitt (TSi) angewandte kryptographische Schutzfunktion umfasst, zu dem Datenpaket (10) durch den Sendeknoten (Ti),
- Übermitteln (S2) des Datenpakets (10) mit der zugeordneten Sicherheitsinformation (SIi) an den Empfangsknoten (Ri) des Übertragungsabschnitts (TSi),
- Überprüfen (S3) der Sicherheitsinformation (SIi) im Empfangsknoten (Ri) gegenüber einer vorgegebenen Richtlinie und
- Bereitstellen (S4) mindestens einer Maßnahme abhängig vom Prüfergebnis.

## Beschreibung

Die Erfindung betrifft ein Verfahren sowie ein System, einen Sendeknoten und einen Empfangsknoten zur Übertragung von Datenpaketen über ein Netzwerk von einem Sender zu einem Empfänger über eine Kommunikationsverbindung bestehend aus mindestens einem Übertragungsabschnitt, über den ein Datenpaket von einem Sendeknoten zum Empfangsknoten übermittelt wird.

Eine Übertragung von Daten, beispielsweise für eine Steuerungskommunikation, ein Monitoring, eine Rekonfiguration oder zur Projektierung eines beispielsweise industriellen Automatisierungssystems, muss gegen Angriffe geschützt werden. Dazu kann die Datenübertragung beispielsweise mittels Sicherheitsprotokollen wie dem Transportschichtsicherheitsprotokoll TLS, dem IP-Sicherheitsprotokoll IPsec, oder ein Medienzugangskontrollsicherheitsprotokoll MACsec geschützt werden. Dies sind Sicherheitsprotokolle, die auf einer Transportschicht, auf einer Vermittlungsschicht oder einer Sicherungsschicht entsprechend einem von der Internationalen Telecommunikation Union (ITU) standardisierten OSI-Referenzmodell arbeiten. Als Übertragungsmedium werden unterschiedliche drahtgebundene und/oder drahtlose Übertragungstechnologien verwendet, wie zum Beispiel Ethernet, DSL, ATM, SDH, Bluetooth, ZigBee, WLAN, WiMAX sowie zellulare Mobilfunknetze gemäß einem UMTS, LTE oder 5G Standard der 3GPP Standardisierungsorganisation.

Eine Sicherheitslösung kann grundsätzlich unabhängig von der Übertragungstechnologie realisiert werden, beispielsweise auf einer Sitzungs-, Darstellungs- oder Anwendungsschicht gemäß dem OSI-Referenzmodell. Dabei kommt es jedoch im Allgemeinen zu einer mehrfachen Verschlüsselung, das heißt beispielsweise eine Verschlüsselung durch die Anwendung und durch das Übertragungssystem.

Insbesondere bei batteriebetriebenen Geräten und bei Geräten mit eigener Energiegewinnung, erhöht dies den Energiebedarf, und verschlechtert Echtzeiteigenschaften bei Echtzeitanwendungen. Dies betrifft insbesondere künftige Mobilfunknetze, welche Geräte eines Internets der Dinge unterstützen. Auch lassen sich nicht alle Sicherheitsziele allein durch Sicherheitsfunktionen auf Anwendungsschicht lösen, wie beispielsweise ein Manipulationsschutz von Mobilfunk-Signalisierungsnachrichten.

Es ist somit die Aufgabe der vorliegenden Erfindung, eine Datenübertragung optimiert kryptographisch zu schützen und dabei insbesondere eine mehrfache kryptographische Sicherung einer Datenverbindung zu vermeiden.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Übertagung von Datenpaketen über ein Netzwerk von einem Sender zu einem Empfänger über eine Kommunikationsverbindung bestehend aus mindestens einem Übertragungsabschnitt, über den ein Datenpaket von einem Sendeknoten des Übertragungsabschnitts zu einem Empfangsknoten des Übertragungsabschnitts übermittelt wird, mit folgenden Schritten für mindestens einen Übertragungsabschnitt. Ein erster Verfahrensschritt ist ein Zuordnen einer Sicherheitsinformation zu dem Datenpaket durch mindestens einen Sendeknoten, wobei die Sicherheitsinformation die Information über eine bei der Übertragung des Datenpakets über einen benachbarten Übertragungsabschnitt angewandte kryptographische Schutzfunktion umfasst. Weitere Schritte sind das Übermitteln des Datenpakets mit der zugeordneten Sicherheitsinformation an einen nachfolgenden Empfangsknoten und ein Überprüfen der Sicherheitsinformation in dem Empfangsknoten gegenüber einer vorgegebenen Richtlinie und ein Bereitstellen mindestens einer Maßnahme abhängig vom Prüfergebnis.

Der benachbarte Übertragungsabschnitt eines Senderknotens kann derjenige Übertragungsabschnitt sein, über den das Datenpaket zu dem Sendeknoten übertragen wurde (d.h. der Sendeknoten leitet das Datenpaket weiter). Ebenso kann der benachbarte Übertragungsabschnitt eines Senderknotens derjenige Übertragungsabschnitt sein, über den der Sendeknoten das Datenpaket überträgt. Die Sicherheitsinformation gibt somit entweder an wie das Datenpaket geschützt war, das der Sendekonten weiterleitet, oder wie das Datenpaket vom Sendeknoten auf dem nachfolgenden Übertragungsabschnitt geschützt wird.

Eine Schutzfunktion kann eine oder mehrere zum kryptographischen Schutz der Datenübertragung dienende Funktionalität/en umfassen. Die Sicherheitsinformation gibt somit eine die Übertragung des Datenpakets betreffende Information, die insbesondere auf einer Sicherungs-, Vermittlungs- oder Transportschicht dem Datenpaket zugeordnet wird. Durch eine solche Zuordnung einer Sicherheitsinformation zu dem Datenpaket kann der Empfangsknoten die Sicherheitsinformation überprüfen und Maßnahmen abhängig vom Prüfergebnis bereitstellen.

War der benachbarte Übertragungsabschnitt beispielsweise eine Funkschnittstelle, so wird durch die Sicherheitsinformation die verwendete Schutzfunktion auf der Funkschnittstelle dem nachfolgenden Empfangsknoten mitgeteilt und können dort ausgewertet und geprüft werden.
Des Weiteren könnte ein Aktor als Empfangsknoten abhängig vom Prüfergebnis der Sicherheitsinformation ein Datenpaket mit Steuerungsinformation zur Überwachung, Beeinflussung oder Steuerung eines technischen Prozesses akzeptieren oder abweisen. So kann beispielsweise das Datenpaket umfassend eine Steuerfunktion beispielsweise zur Überwachung, Beeinflussung oder Steuerung eines technischen Prozesses, in einer Automatisierungsanlage über einen Aktor als Empfangsknoten akzeptiert werden.

In einer vorteilhaften Ausführungsform wird als Maßnahme eine Schutzfunktion für das Datenpaket auf dem nächsten Übertragungsabschnitt ausgewählt.

Dies ermöglicht es, die Schutzfunktion auf dem nachfolgenden Übertragungsabschnitt basierend auf dem Wissen über die angewandten Schutzfunktionen des vorhergehenden Übertragungsabschnitts auszuwählen. War der benachbarte Übertragungsabschnitt beispielsweise eine Funkschnittstelle mit einer hohen kryptographischen Schutzfunktion, so kann für den nachfolgenden Übertragungsabschnitt beispielsweise eine niedrige Schutzfunktion ausgewählt werden. Dies gibt beispielsweise die Richtlinie vor. So kann die Schutzfunktion auf einer Funkschnittstelle oder einem VPN-Tunnel beispielsweise für das Erreichen der erforderlichen Sicherheit der gesamten Kommunikationsverbindung genutzt werden.

In einer vorteilhaften Ausführungsform wird dem Datenpaket eine weitere Sicherheitsinformation für den nächsten Übertragungsabschnitt zugeordnet und die weitere Sicherheitsinformation zusammen mit der mindestens einen ersten Sicherheitsinformation an den nächsten Empfangsknoten übermittelt.

Dies hat den Vorteil, dass eine Historie an Sicherheitsinformationen über die vorangegangenen Übertragungsabschnitte dem jeweils nächsten Empfangsknoten zur Auswertung bereitgestellt werden kann. Somit kann aus dem Datenpaket selbst die Information gewonnen werden, auf welche Weise das Datenpaket auf unterschiedlichen Übertragungsabschnitten gegen Abhören oder Manipulation geschützt war. Diese Information liegt heute nicht vor, sodass sie von einer Empfangseinheit nicht ausgewertet werden kann und beispielsweise an eine Firewall weitergegeben werden kann. Die Erfindung ermöglicht es, die "Übertragungshistorie" eines Pakets auszuwerten.

In einer vorteilhaften Ausführungsform erfolgt das Zuordnen der Sicherheitsinformation durch ein Anordnen der Sicherheitsinformation im Kopfteil des Datenpakets.

Dies hat den Vorteil, dass jedes einzelne Datenpaket Sicherheitsinformation enthält und somit im Empfangsknoten direkt verfügbar ist und ausgewertet werden kann. Somit ist eine schnelle Auswertung und Reaktion im Empfangsknoten möglich.

In einer vorteilhaften Ausführungsform erfolgt das Zuordnen durch ein Anordnen eines Referenzwertes der Sicherheitsinformation im Kopfteil des Datenpakets und anhand des Referenzwertes wird die Sicherheitsinformation vom Empfangsknoten bei einem Sicherheitsserver ermittelt.

Ein Referenzwert kann beispielsweise ein Hashwert der Sicherheitsinformation sein. Das Verwenden eines Referenzwertes benötigt weniger Übertragungsbandbreite auf den nachfolgenden Übertragungsabschnitten und verringert, insbesondere bei einer Kommunikationsverbindung mit vielen Übertragungsabschnitten den Overhead, also den Anteil des Kopfteils zu Nutzdaten des Datenpakets.

In einer vorteilhaften Ausführungsform wird das Zuordnen durch ein Anordnen einer Sicherheitsinformation in einem Kopfteil eines das Datenpaket enthaltenden, übergeordneten Datenpakets ausgeführt.

Ein das Datenpaket enthaltendes, übergeordnetes Datenpaket kann beispielsweise ein Datenpaket einer virtuellen privaten Netzwerkverbindung (VPN) sein. Somit können Empfangsknoten, die eine VPN-Verbindung terminieren, die Sicherheitsinformation auswerten und entsprechend von Richtlinien in der VPN-Funktionalität weiterbehandeln.

In einer vorteilhaften Ausführungsform umfasst die kryptographische Schutzfunktion mindestens eine der Angaben zu einer verwendeten Sicherheitsoption, ein verwendetes Sicherheitsprotokoll, insbesondere der Sicherungsschicht oder der Vermittlungsschicht oder der Transportschicht entsprechend einem OSI-Referenzmodell, eine Cipher-Suite, eine Schlüssellänge, und/oder eine Angabe zur geschützten Übertragungsstrecke für die die kryptographische Schutzfunktion gültig ist.

Somit gibt die Sicherheitsinformation detaillierte Informationen zu unterschiedlichen Sicherheitsaspekten des benachbarten Übertragungsabschnitts an. Durch eine Angabe zur geschützten Übertragungsstrecke, die beispielsweise einen oder mehrere Übertragungsabschnitte umfasst, kann oder können beispielsweise eine Sicherheitsinformation für eine Funkzugangsverbindung, die beispielsweise von einem Zugangsmodem in einem Zugangsnetz zu einer Basisstation im Kernnetz eines zellulären Mobilfunknetzes reicht, oder eine Sicherheitsinformation zu einem Ende-zu-Ende-Schutz einer Übertragungsstrecke angibt, bereitgestellt werden.
In einer vorteilhaften Ausführungsform wird die Sicherheitsinformation kryptographisch bezüglich Authentizität des Sendeknotens und Integrität der Sicherheitsinformation geschützt und/oder verschlüsselt übertragen.

Dies verhindert ein Auslesen oder eine Manipulation der Sicherheitsinformation durch unerlaubte Dritte. Somit wird beispielsweise ein Ausforschen von wenig gesicherten Übertragungsabschnitten oder eine Manipulation der Sicherheitsinformation erschwert oder gar verhindert.

In einer vorteilhaften Ausführungsform umfasst die Sicherheitsinformation eine Information zu dem vom Sender des Datenpakets beim Zugang zum Netzwerk verwendeten Authentisierungsverfahren.

Eine solche Information kann beispielsweise eine zur Authentifikation des Senders verwendete Authentifizierungsart und die Stärke des Authentifizierungsverfahrens sein. Diese Information ermöglicht es einem Empfangsknoten beziehungsweise einem nachfolgenden Sendeknoten diese Information bei der Auswahl der Schutzfunktion für den nächsten Übertragungsabschnitt auszuwerten und Richtlinien basierend auf dem Authentisierungsverfahren des Senders durchzusetzen.

In einer vorteilhaften Ausführungsform übermittelt der jeweilige Sendeknoten die Sicherheitsinformation an einen Filterknoten oder den Sicherheitsserver.

Im Filterknoten oder auch im Sicherheitsserver können weitere Filterkriterien oder Sicherheitsregeln geprüft und entsprechend dem Prüfergebnis an den Empfangsknoten beziehungsweise den nachfolgenden Sendeknoten übermittelt werden.

In einer vorteilhaften Ausführungsform gibt der Sender zusätzlich eine Mindest-Sicherheitsanforderung für alle Sicherheitsabschnitte beziehungsweise für mindestens einen Übertragungsabschnitt vor und ordnet die Mindest-Sicherheitsanforderung im Datenpaket an.

Dadurch kann jeder einzelne oder eine Teilmenge der Sendeknoten basierend auf der Mindest-Sicherheitsanforderung die kryptographische Schutzfunktion für den nachfolgenden Übertragungsabschnitt auswählen.

Ein weiterer Aspekt der Erfindung betrifft ein System zur Übertragung von Datenpaketen über ein Netzwerk von einem Sender zu einem Empfänger über eine Kommunikationsverbindung bestehend aus mindestens einem Übertragungsabschnitt, über den das Datenpaket übermittelt wird, umfassend mindestens einen Sendeknoten und einen Empfangsknoten, die derart ausgebildet sind, das vorangehend beschriebene Verfahren auszuführen.

Ein weiterer Aspekt der Erfindung betrifft einen Sendeknoten zur Übertragung von Datenpaketen über ein Netzwerk von einem Sender zu einem Empfänger über eine Kommunikationsverbindung bestehend aus mindestens einem Übertragungsabschnitt, über den das Datenpaket vom Sendeknoten zu einem Empfangsknoten übermittelt wird, umfassend eine Zuordnungseinheit, die derart ausgebildet ist eine Sicherheitsinformation, die Information über eine bei der Übertragung des Datenpakets über den benachbarten Übertragungsabschnitt angewandte kryptographische Schutzfunktion umfasst, dem Datenpaket zuzuordnen, und eine Sendeeinheit, die derart ausgebildet ist das Datenpaket mit der zugeordneten Sicherheitsinformation an einen nachfolgenden Empfangsknoten zu übermitteln.

Somit kann der Sendeknoten selbst Informationen zur kryptographischen Schutzfunktion, insbesondere auf der Transport-, Vermittlungs- und Sicherungsschicht entsprechend dem OSI-Referenzmodell, im Datenpaket eincodieren und übermitteln. Somit steht diese Sicherheitsinformation dem Empfangsknoten zur weiteren Auswertung zur Verfügung.

Ein weiterer Aspekt der vorliegenden Erfindung betrifft einen Empfangsknoten zur Übertragung von Datenpaketen über ein Netzwerk von einem Sender zu einem Empfänger über eine Kommunikationsverbindung bestehend aus mindestens einem Übertragungsabschnitt, über den das Datenpaket von einem Sendeknoten zu einem Empfangsknoten übermittelt wird, umfassend eine Empfangseinheit, die derart ausgebildet ist das Datenpaket zu empfangen, eine Überprüfungseinheit, die derart ausgebildet ist die Sicherheitsinformation gegenüber einer vorgegebenen Richtlinie zu überprüfen, und eine Bereitstellungseinheit, die derart ausgebildet ist mindestens eine Maßnahme abhängig vom Prüfergebnis bereitzustellen.

Ein solcher Empfangsknoten kann die Sicherheitsinformation auswerten und somit gegenüber vorgegebenen Richtlinien überprüfen. Insbesondere können die Richtlinien einen Doppelschutz der Datenpakete vermeiden beziehungsweise den kryptographischen Schutz für den nächsten Übertragungsabschnitt auf den nun bekannten kryptographischen Schutz vorhergehender Übertragungsabschnitte anpassen.

Ein weiterer Aspekt der Erfindung betrifft ein Computerprogrammprodukt, das direkt in einen Speicher eines digitalen Computers ladbar ist, umfassend Programmcodeteile, die dazu geeignet sind, die Schritte des vorgehend beschriebenen Verfahrens durchzuführen.

Sofern in der nachfolgenden Beschreibung nicht anders angegeben ist, beziehen sich die Begriffe "zuordnen", "übermitteln", "überprüfen", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Insbesondere kann das Verfahren in einem Computer implementiert beziehungsweise durch Prozessoren ausgeführt werden. Der Ausdruck "Computer" sollte möglichst breit ausgelegt werden, um insbesondere alle elektronischen Geräte mit Datenverarbeitungseigenschaften abzudecken. Computer sind somit beispielsweise Personalcomputer, Server, Handheld Computersysteme, Pocket PCs, Mobilfunkgeräte und andere Kommunikationsgeräte, die Rechner gestützte Daten verarbeiten können, Prozessoren und andere elektronische Geräte zur Datenverarbeitung.

Unter einem Prozessor kann im Zusammenhang mit der Erfindung beispielsweise ein Gerät oder eine elektronische Schaltung verstanden werden. Bei einem Prozessor kann es sich insbesondere um einen digitalen Signalprozessor handeln. Auch kann unter einem Prozessor ein virtualisierter Prozessor oder eine Soft-CPU verstanden werden. Es kann sich auch beispielsweise um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, des Sende- beziehungsweise Empfangsknotens, des Senders sowie Empfängers, oder andere Aspekte und Teilaspekte der Erfindung implementiert.

Die jeweilige Einheit, zum Beispiel die Zuordnungseinheit, die Sendeeinheit, die Empfangseinheit, die Überprüfungseinheit oder die Bereitstellungseinheit kann hardwaretechnisch und/oder auch softwaretechnisch implementiert sein. Bei einer hardwaretechnischen Implementierung kann die jeweilige Einheit als Vorrichtung oder als Teil einer Vorrichtung zum Beispiel als Computer oder als Mikroprozessor oder als Steuerrechner ausgebildet sein. Bei einer softwaretechnischen Implementierung kann die jeweilige Einheit als Computerprogrammprodukt, als eine Funktion und eine Routine, als Teil eines Programmcodes oder als ausführbares Objekt ausgebildet sein.

Ein Computerprogrammprodukt kann beispielsweise als Speichermedium, wie zum Beispiel Speicherkarte, USB-Stick, CD-ROM, DVD oder auch in Form einer herunterladbaren Datei von einem Server in einem Netzwerk bereitgestellt oder geliefert werden.

Die für das vorgeschlagene Verfahren beschriebenen Ausführungsformen und Merkmale gelten für das vorgeschlagene System, den vorgeschlagenen Sende- und Empfangsknoten sowie sonstige am Verfahren beteiligte Komponenten entsprechend.

Nachfolgende Ausführungsbeispiele weisen, sofern nicht anders angegeben oder bereits angegeben, zumindest einen Prozessor und/oder eine Speichereinheit auf, um das Verfahren zu implementieren oder auszuführen.

Ausführungsbeispiele des erfindungsgemäßen Verfahrens sowie der erfindungsgemäßen Sendeeinheit und Empfangseinheit sind in den Zeichnungen beispielhaft dargestellt und werden anhand der nachfolgenden Beschreibung näher erläutert. Es zeigen:
- Fig. 1: ein Ausführungsbeispiel einer Kommunikationsverbindung zwischen einem Sender und einem Empfänger umfassend erfindungsgemäße Sende- und Empfangsknoten in schematischer Darstellung;
- Fig. 2: ein Ausführungsbeispiel des erfindungsgemäßen Verfahrens als Ablaufdiagramm;
- Fig. 3A/B: jeweils ein Ausführungsbeispiel eines dem erfindungsgemäßen Verfahren entsprechenden Datenpaketes in schematischer Darstellung;
- Fig. 4: ein Ausführungsbeispiel eines erfindungsgemäßen Sendeknotens in Blockdarstellung; und
- Fig. 5: ein Ausführungsbeispiel eines erfindungsgemäßen Empfangsknotens in Blockdarstellung.

In den Figuren sind funktionsgleiche Elemente mit denselben Bezugszeichen versehen, sofern nichts anderes angegeben ist.

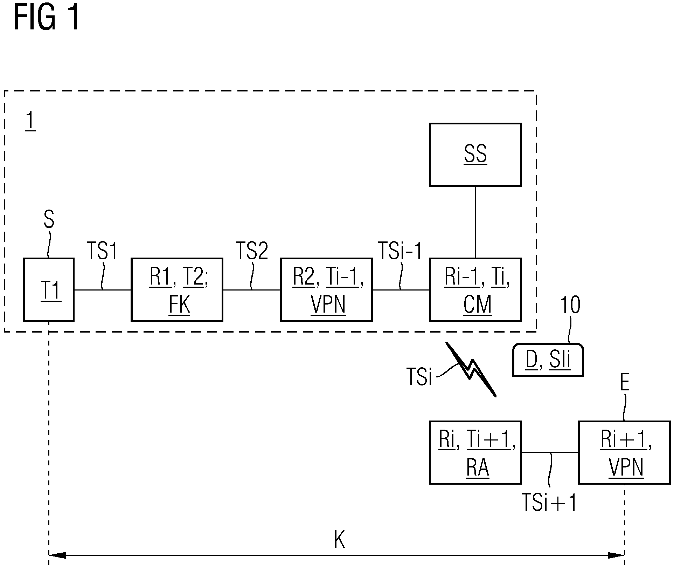

Figur 1 zeigt eine schematische Darstellung einer Kommunikationsverbindung K zwischen einem Sender S und einem Empfänger E. Der Sender S ist beispielsweise eine Komponente eines Automatisierungsnetzwerks 1 oder eines sonstigen Kommunikationsnetzwerks, bei dem Daten D in Datenpaketen 10 übertragen werden. Das Automatisierungsnetzwerk 1 ist über einen VPN-Knoten VPN, der ein virtuelles privates Netzwerk terminiert und ein Mobilfunkmodem CM mit beispielsweise einem Zugangsknoten RA eines Mobilfunknetzwerks und weiter beispielsweise über ein öffentliches Netzwerk mit einem Dienstserver als Empfänger E verbunden. Ein möglicher Übertragungspfad zwischen dem Sender S und dem Empfänger E, der beispielsweise einen Back-End-Dienst bereitgestellt, ist beispielhaft dargestellt.

Der Übertragungspfad umfasst eine Mehrzahl von Übertragungsabschnitten TS1, TS2, TSi-1, TSi, TSi+1, die jeweils von einem Sendeknoten T1,..,Ti+1 und einem Empfangsknoten R1,..,Ri+1, abgeschlossen werden. Diese werden auch als Endknoten der Übertragungsstrecke bezeichnet. Einem Sendeknoten T1,..,Ti+1 und einem Empfangsknoten R1,..,Ri+1 kann ein Sender S, ein Filterknoten FK, ein VPN-Knoten VPN, ein Mobilfunkmodem CM oder ein Netzzugangsknoten RA zugeordnet sein und beispielsweise physisch integriert oder als externe Komponente, die mit diesen über eine externe Verbindung verbunden ist, ausgebildet sein. Für jeden einzelnen Übertragungsabschnitt TS1,.. TSi+1, aber auch für einen Übertragungspfad umfassend eine Folge oder eine Mehrzahl von Übertragungsabschnitten, kann jeweils eine Sicherheitsinformation SIi zur Art der Übertragung auf dem jeweiligen Übertragungsabschnitt TSi bereitgestellt werden.

Die Sicherheitsinformation SIi umfasst dabei insbesondere eine kryptographische Schutzfunktion, die auf dem jeweiligen benachbarten Übertragungsabschnitt TSi-1, TSi, angewandt war bzw. wird. Diese Sicherheitsinformation SIi umfasst insbesondere Information über die Art der Übertragung, beispielsweise ob es sich um eine drahtlose, drahtgebundene oder gemischt drahtlos und drahtgebundene Übertragung handelt. Es kann beispielsweise die konkret verwendete Übertragungstechnologie angegeben werden, beispielsweise durch die der angewandten Technologie entsprechende Standardbezeichnung, wie WLAN 802.11b Link oder 3GPP 5G New Radio Link. Diese Angaben können sich auch auf einen geschützten Übertragungspfad, für die die kryptographische Schutzfunktion gültig ist, beziehen. Eine weitere Angabe zum geschützten Übertragungsabschnitt TSi bzw. Übertragungspfad ist beispielsweise die Identität der Endknoten des Übertragungsabschnitts TSi beziehungsweise des Übertragungspfads, wie beispielsweise eine IP-Adresse oder ein Zertifikat der Endknoten des Übertragungsabschnitts TSi oder des Übertragungspfads. Dazu zählen des Weiteren Angaben zum Manipulations- beziehungsweise Abhörschutz, beispielsweise ob es sich um einen physikalisch geschützten Übertragungspfad beziehungsweise -abschnitt TSi, ein logisches virtuelles privates Netzwerk, oder um eine/n kryptographisch integritätsgeschützte/n oder kryptographisch verschlüsselte/n und integritätsgeschützte/n Übertragungsstrecke beziehungsweise Übertragungsabschnitt handelt.

Die kryptographische Schutzfunktion kann des Weiteren eine Angabe zu mindestens einer verwendeten Sicherheitsoption sein. Die Angabe kann die Sicherheitsoption selbst sowie deren Status umfassen, beispielsweise Verschlüsselung aktiv, Integritätsschutz aktiv, Replay-Schutz inaktiv. Des Weiteren ist eine Sicherheitsoption das verwendete Authentisierungs- und Schlüsselvereinbarungsprotokoll, die verwendete Protokollversion oder auch Schlüsselaktualisierungsintervalle oder ein Widerrufsstatus der verwendeten kryptographischen Schlüssel, eine Länge eines vereinbarten Sitzungsschlüssels beziehungsweise dessen effektive Länge sowie die Länge des verwendeten Authentisierungsschlüssels.

Als kryptographische Schutzfunktion kann des Weiteren ein verwendetes Sicherheitsprotokoll insbesondere der Sicherungsschicht, der Vermittlungs- oder der Transportschicht entsprechend einem OSI-Referenzmodell enthalten sein. Dies sind insbesondere Sicherheitsprotokolle wie MACsec, IPsec, IP over TLS beziehungsweise Sicherheitsprotokolle der Vermittlungsschicht für den Netzwerkzugang.

Diese kryptographische Schutzfunktion wird als Sicherheitsinformation SIi einem Datenpaket 10 bereitgestellt und zugeordnet. Optional wird die Sicherheitsinformation SIi jeweils kryptographisch bezüglich einer Authentizität des Sendeknotens Ti und/oder einer Integrität der Sicherheitsinformation geschützt und/oder verschlüsselt übertragen. Dies wird insbesondere für Übertragungsabschnitte TSi zwischen Netzwerkübergangsknoten, wie beispielsweise einem Mobilfunkmodem CM und einem Netzzugangsknoten RA eines Mobilfunknetzes als vorteilhaft angesehen.

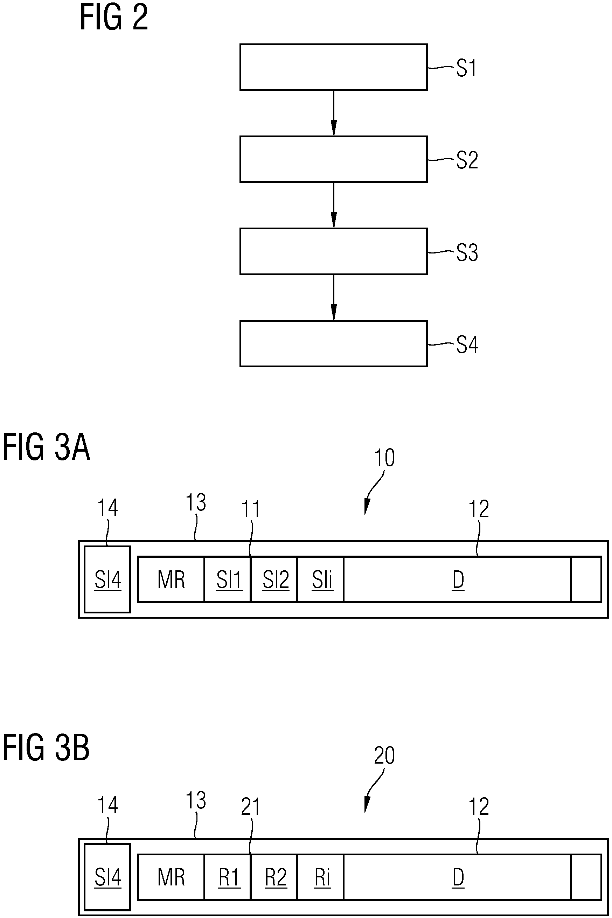

Anhand eines Ablaufdiagramms in Figur 2 wird nun das erfindungsgemäße Verfahren beschrieben. Ein Datenpaket 10 vom Sender S zum Empfänger E wird über eine Kommunikationsverbindung K mit mindestens einem Übertragungsabschnitt TS1,.., TSi+1, übertragen, wobei die Übertragungsabschnitte TS1,.., TSi+1, in unterschiedliche Netzwerke, beispielsweise einem in Figur 1 gezeigten Automatisierungsnetzwerk 1, einem Mobilfunknetzwerk mit Zugangsknoten RA sowie möglicherweise einem weiteren öffentlichen IP-Netzwerk, angeordnet sind. Dabei wird ein Übertragungsabschnitt TSi jeweils von einem Sendeknoten Ti sowie einem Empfangsknoten Ri terminiert. Der Index i bezeichnet hier einen beliebigen Übertragungsabschnitt aus der Gesamtheit der für die Kommunikationsverbindung K verwendeten Übertragungsabschnitte TS1,.., TSi+1.

Für mindestens einen der Übertragungsabschnitte TS1, .., TSi+1 wird in einem ersten Verfahrensschritt beispielhaft für den Übertragungsabschnitt TSi eine Sicherheitsinformation SIi, die Information über eine bei der Übertragung des Datenpakets 10 über den nachfolgenden Übertragungsabschnitt TSi angewandte kryptographische Schutzfunktion umfasst zu dem Datenpaket 10 durch den Sendeknoten TSi zugeordnet. Das Datenpaket 10 ist dabei insbesondere ein Ethernetframe oder ein IP-Paket. Im nächsten Verfahrensschritt S2 wird das Datenpaket 10 mit der zugeordneten Sicherheitsinformation SIi an den Empfangsknoten Ri des Übertragungsabschnitts TSi übermittelt. Im Empfangsknoten Ri wird im Verfahrensschritt S3 die Sicherheitsinformation SIi ausgewertet. Dazu wird die Sicherheitsinformation SIi gegenüber einer vorgegebenen Richtlinie überprüft. Abhängig vom Prüfergebnis wird im Verfahrensschritt S4 nun eine Maßnahme bezogen auf das Datenpaket 10 vom Empfangsknoten Ri bereitgestellt.

Eine Maßnahme kann dabei sein, dass eine Schutzfunktion für das Datenpaket 10 auf dem nächsten Übertragungsabschnitt TSi+1 ausgewählt wird. Diese Auswahl kann entweder durch die vorgegebene Richtlinie im Empfangsknoten Ri oder in einem Sendeknoten Ti+1 für den nächsten Übertragungsabschnitt implementiert werden. Insbesondere wird dem Datenpaket 10 die weitere Sicherheitsinformation SIi+1 für den nächsten Übertragungsabschnitt TSi+1 zugeordnet und zusammen mit der mindestens einen ersten Sicherheitsinformation (SIi) an den nächsten Empfangsknoten Ri+1 übermittelt. Die Sicherheitsinformation SIi, SIi+1 kann explizit im Datenpaket 10 eincodiert sein oder als Referenzwert, beispielsweise ein Hashwert der Sicherheitsinformationen SIi, SIi+1, referenziert werden. Sie kann insbesondere in einem Kopfteil des Datenpakets eincodiert werden, oder das eigentliche Datenpaket kann in ein weiteres Datenpaket, in das die Sicherheitsinformation eincodiert wird, eingepackt werden.

Figur 3A und 3B zeigen ein solches Datenpaket 10, 20. Das Datenpaket 10, siehe Fig. 3A umfasst einen Nutzdatenbereich 12, in dem die zu übertragenden Nutzdaten angeordnet sind, sowie einen Kopfteil 11 der üblicherweise dem Nutzdatenteil 12 vorangestellt ist. Im Kopfteil 11 sind beispielsweise drei Sicherheitsinformationen SI1, SI2 und SIi enthalten, das heißt eincodiert, die kryptographische Schutzfunktionen zu dem Übertragungsabschnitten TI1, TI2 und TIi umfassen. Dabei können auch Sicherheitsinformationen von nicht aneinander angrenzenden Übertragungsabschnitten zugeordnet sein. So kann die Information zu beliebigen Übertragungsabschnitten eincodiert sein. Es kann auch eine Information in der Sicherheitsinformation bereitgestellt werden, dass ein Datenpaket 10 über einen virtuellen privaten Netzwerktunnel, beispielsweise ein Site-to-Site-VPN, in Fig.1 von T3 bis Ri+1, und zusätzlich über eine kryptographisch geschützte Funkschnittstelle, siehe TSi in Figur 1 übertragen wurde. Dies wird insbesondere in einer Sicherheitsinformation SI4 im Kopfteil 14 eines übergeordneten Datenpaketes 13 angeordnet.

Statt der Sicherheitsinformation selbst kann im Datenpaket 20 ein Referenzwert Ri im Kopfteil 21 für die Sicherheitsinformation angeordnet sein, siehe Fig. 3B. Die Sicherheitsinformation zu einem Übertragungsabschnitt kann dabei beispielsweise auf einem Sicherheitsserver SS, siehe Figur 1, hinterlegt werden und durch den Referenzwert Ri abgefragt werden. Dies ist insbesondere bei langlebigen Kommunikationsverbindungen beziehungsweise bei Kommunikationsverbindungen K, in denen größere Datenmengen gesammelt werden, sinnvoll.

Das Verfahren führt zwar zu einem relativ hoch erscheinenden Overhead. Da viele kritische Anwendungen, z.B. im industriellen Umfeld wie z.B. einem Automatisierungssystem, jedoch eine äußerst hohe Verlässlichkeit benötigen, dabei jedoch geringe Datenvolumen im Vergleich zu beispielsweise Multimedia-Streaming-Daten, aufweisen, ist das Verfahren dennoch sinnvoll anwendbar. Der Overhead, also der Kopfteil des Datenpaketes 10 kann reduziert werden, indem die genannten Sicherheitsinformationen SI zu Übertragungsabschnitt TSi extern beispielsweise in einem Sicherheitsserver gespeichert werden und im Datenpaket 10 nur ein eindeutiger Referenzwert R für die gesamte Kommunikationsverbindung K oder ein Referenzwert Ri pro Übertragungsabschnitt TSi enthalten ist. Ein solcher Referenzwert kann beispielsweise eine komprimierte Netzwerkadresse des Sicherheitsservers SS sein. Der in Figur 1 dargestellte Sicherheitsserver SS kann dazu beispielsweise verwendet werden. Der Sicherheitsserver SS ist dabei von jedem Sendeknoten Ti beziehungsweise Empfangsknoten Ri erreichbar.

In das Datenpaket 10, 20 kann auch eine Information eincodiert werden, die eine Aussage darüber trifft, mit welchem Sicherheitsverfahren sich der Sender, beispielsweise ein Gerät oder ein Benutzer, der Nachricht an dessen Zugangspunkt authentifiziert hat. Des Weiteren kann im Kopfteil 11 eine Mindestanforderung an Schutzfunktionen für die Kommunikationsverbindung K angeordnet werden. Diese kann bei der Überprüfung der Sicherheitsinformation miteinbezogen werden und basierend auf dieser Mindestanforderung Maßnahmen für weitere Maßnahmen zur Weiterbehandlung des Datenpakets abgeleitet werden.

Die Sicherheitsinformationen SI1, SI2, SIi der einzelnen Übertragungsabschnitte TS1, TS 2, TSi sowie optional eine Mindestanforderung MR für die gesamte Kommunikationsverbindung kann kryptographisch geschützt werden. Dies kann beispielsweise durch eine digitale Signatur mittels bekannten Sicherheitsalgorithmen wie RSA, einem DSA oder einem digitalen Signaturalgorithmus mit elliptischen Kurven ECDSA erreicht werden. Alternativ ist die Sicherheitsinformation basierend auf einem symmetrischen Schlüssel beispielsweise mittels einem geschützten Nachrichtenauthentisierungscode geschützt. Dies setzt voraus, dass eine überprüfende Komponente, beispielsweise ein Empfangsknoten Ri oder ein Filterknoten FK, die jeweiligen Übertragungsabschnittsschlüssel kennt. Die Sicherheitsinformation SIi kann auch verschlüsselt werden, um eine Schwachstellenanalyse durch einen potenziellen Angreifer, insbesondere bei unterschiedlich stark geschützten Übertragungsabschnitten, zu erschweren. Um das Schlüsselmanagement für die Sicherheitsinformation zu erleichtern, kann diese Information auch von den Endpunkten, also den Sendeknoten Ti und Empfangsknoten Ri, eines Übertragungsabschnittes TSi an einen Filterknoten oder aber an einen zentralen Server gesendet werden. Ein solcher zentraler Server kann entsprechend von einem Filterknoten FK nach einer Authentisierung abgefragt werden.

Hat der Sender S eines Datenpaketes 10 eine erforderliche Mindestanforderung MR an den Schutz des Datenpakets 10 auf gewisse Arten von Datenübertragung im Datenpaket 10 vorab spezifiziert, ist es möglich ein Datenpaket 10 unabhängig von einer lokalen Richtlinie auf einem Sendeknoten Ti beziehungsweise Empfangsknoten Ri zu behandeln, beispielsweise zu verwerfen, wenn bei der Übertragung nicht die Mindestanforderung MR des Senders S erfüllt ist. In diesem Fall kann ein Sicherheitsereignis generiert werden und an den ursprünglichen Sender S und/oder auch den Empfänger E mitgeteilt werden. Die Verteilung des Sicherheitsereignisses kann dann entweder im eigentlichen Übertragungspfad oder aber über bekannte Mechanismen erfolgen. Diese erfordern jedoch eine zusätzliche Logik und Ports auf den Filterknoten zur Auswertung der Sicherheitsereignisse.

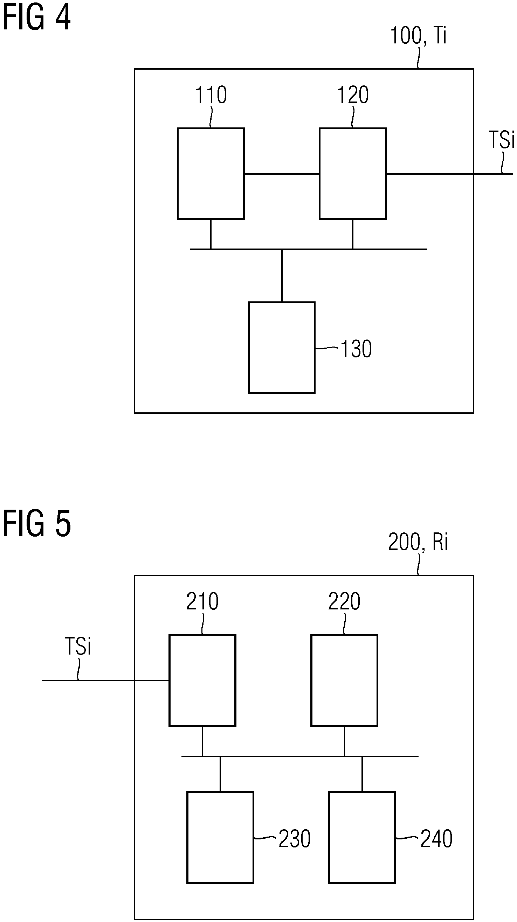

Figur 4 stellt einen Sendeknoten 100, Ti zur Übertragung des Datenpakets 10, 20 über ein Netzwerk von einem Sender S zu einem Empfänger E über eine Kommunikationsverbindung K dar.

Der Sendeknoten 100 umfasst eine Zuordnungseinheit 110, die derart ausgebildet ist eine Sicherheitsinformation SI, die die auf dem benachbarten Übertragungsabschnitt TSi-1, TSi angewandte kryptographische Schutzinformation umfasst, dem Datenpaket 10 zuzuordnen. Der Sendeknoten 100 umfasst des Weiteren eine Sendeeinheit 120, die derart ausgebildet ist das Datenpaket 10, 20 mit der zugeordneten Sicherheitsinformation SIi-1, SIi an den Empfangsknoten, beispielsweise den Empfangsknoten Ri zu übermitteln.

Die Zuordnungseinheit 110 und die Sendeeinheit 120 sind beispielsweise über einen Datenbus miteinander verbunden. Der Sendeknoten 100 kann des Weiteren einen Filterknoten beziehungsweise Filterknotenfunktionalität umfassen.

Figur 5 zeigt entsprechend einen Empfangsknoten 200, Ri. Der Empfangsknoten 200 umfasst eine Empfangseinheit 210, die derart ausgebildet ist ein Datenpaket 10, 20 über einen Übertragungsabschnitt TSi zu empfangen. Der Empfangsknoten 200 umfasst des Weiteren eine Überprüfungseinheit 220, die derart ausgebildet ist die Sicherheitsinformation SIi gegenüber einer vorgegebenen Richtlinie zu überprüfen. Sie umfasst des Weiteren eine Bereitstellungseinheit 240, die derart ausgebildet ist mindestens eine Maßnahme abhängig vom Prüfungsergebnis beispielsweise dem nächsten Sendeknoten oder einem Filterknoten oder sich selbst bereitzustellen.

Der Empfangsknoten 200 kann zusätzlich einen Filterknoten FK beziehungsweise Filterknotenfunktionalität umfassen und Filterknotenfunktionen ausführen. Der Sendeknoten 100 sowie der Empfangsknoten 200 weisen zusätzlich eine Speichereinheit 130, 230 auf, die Richtlinien umfasst, gegen die die empfangene Sicherheitsinformation überprüft wird.

Der Sende- und Empfangsknoten 100, 200 umfassen des Weiteren eine nicht flüchtige Speichereinheit (nicht dargestellt), in das ein Computerprogrammprodukt ladbar ist, das Programmcodeteile enthält, die dazu geeignet sind, die genannten Einheiten derart auszubilden, sodass sie das beschriebene Verfahren durchführen.

Die Erfindung ist nicht auf die beschriebenen Ausführungsbeispiele beschränkt. Alle beschriebenen und/oder gezeichneten Merkmale können im Rahmen der Erfindung vorteilhaft miteinander kombiniert werden.

## Patentansprüche

1. Verfahren zur Übertragung von Datenpaketen (10) über ein Netzwerk von einem Sender (S) zu einem Empfänger (E) über eine Kommunikationsverbindung (K) bestehend aus mindestens einem Übertragungsabschnitt (TSi), über den ein Datenpaket (10) von einem Sendeknoten (Ti) zu einem Empfangsknoten (Ri) übermittelt wird, mit folgenden Schritten für mindestens einen Übertragungsabschnitt (TSi):
- Zuordnen (S1) einer Sicherheitsinformation (SIi), die Information über eine bei der Übertragung des Datenpakets (10) über einen benachbarten Übertragungsabschnitt (TSi) angewandte kryptographische Schutzfunktion umfasst, zu dem Datenpaket (10) durch mindestens einen Sendeknoten (Ti),
- Übermitteln (S2) des Datenpakets (10) mit der zugeordneten Sicherheitsinformation (SIi) an den Empfangsknoten (Ri) des Übertragungsabschnitts (TSi),
- Überprüfen (S3) der Sicherheitsinformation (SIi) in einem Empfangsknoten (Ri) gegenüber einer vorgegebenen Richtlinie und
- Bereitstellen (S4) mindestens einer Maßnahme abhängig vom Prüfergebnis.

2. Verfahren nach Anspruch 1, wobei eine Schutzfunktion für das Datenpaket (10) auf dem nächsten Übertragungsabschnitt (TSi+1) als Maßnahme ausgewählt wird.

3. Verfahren nach Anspruch 1 oder 2, wobei dem Datenpaket (10) eine weitere Sicherheitsinformation (SIi+1) für den nächsten Übertragungsabschnitt (TSi+1) zugeordnet wird und die weitere Sicherheitsinformation (SIi+1) zusammen mit der mindestens einen ersten Sicherheitsinformation (SIi) an den nächsten Empfangsknoten (Ri+1) übermittelt wird.

4. Verfahren nach einem der vorhergehenden Ansprüche, wobei das Zuordnen der Sicherheitsinformation (SIi) durch ein Anordnen der Sicherheitsinformation (SIi) im Kopfteil (11) des Datenpakets (10) erfolgt.

5. Verfahren nach einem der Ansprüche 1 bis 3, wobei das Zuordnen durch ein Anordnen eines Referenzwertes der Sicherheitsinformation (SIi) im Kopfteil (11) des Datenpakets (10) erfolgt und anhand des Referenzwertes die Sicherheitsinformation (SIi) vom Empfangsknoten (Ri) bei einem Sicherheitsserver (SS) ermittelt wird.

6. Verfahren nach einem der vorhergehenden Ansprüche, wobei das Zuordnen durch ein Anordnen der Sicherheitsinformation (SIi) in einen Kopfteil (14) eines das Datenpaket enthaltenden, übergeordneten Datenpakets (13) ausgeführt wird.

7. Verfahren nach einem der vorhergehenden Ansprüche, wobei die kryptographische Schutzfunktion mindestens eine der Angaben zu einer verwendeten Sicherheitsoption, ein verwendetes Sicherheitsprotokoll, insbesondere der Sicherungsschicht oder der Vermittlungsschicht oder der Transportschicht entsprechend einem OSI-Referenzmodell, und/oder eine Angabe zum geschützten Übertragungspfad, für die die kryptographische Schutzfunktion gültig ist, umfasst.

8. Verfahren nach einem der vorhergehenden Ansprüche, wobei die Sicherheitsinformation (SIi) kryptographisch bezüglich Authentizität des Sendeknotens (Ti) und Integrität der Sicherheitsinformation (SIi) geschützt und/oder verschlüsselt übertragen wird.

9. Verfahren nach einem der vorhergehenden Ansprüche, wobei die Sicherheitsinformation (SIi) eine Information zu dem vom Sender (S) des Datenpaketes (10) beim Zugang zum Netzwerk verwendeten Authentifizierungsverfahren umfasst.

10. Verfahren nach einem der vorhergehenden Ansprüche, wobei der jeweilige Sendeknoten (Ti) die Sicherheitsinformation (SIi) an einen Filterknoten (FK) oder den Sicherheitsserver (SS) übermittelt.

11. Verfahren nach einem der vorhergehenden Ansprüche, wobei der Sender (S) zusätzlich eine Mindest-Sicherheitsanforderung (MR) für alle Übertragungsabschnitte (TS1,..,TSi,..TSi+1) beziehungsweise für mindestens einen Übertragungsabschnitt (TSi) vorgibt und die Mindest-Sicherheitsanforderung (MR) im Datenpaket (10) anordnet.

12. System zur Übertragung von Datenpaketen (10) über ein Netzwerk von einem Sender (S) zu einem Empfänger (E) über eine Kommunikationsverbindung (K) bestehend aus mindestens einem Übertragungsabschnitt (TSi), über den das Datenpaket (10) übermittelt wird, umfassend
mindestens einen Sendeknoten (Ti) und einen Empfangsknoten (Ri), die derart ausgebildet sind, das Verfahren nach einem der Ansprüche 1 bis 11 auszuführen.

13. Sendeknoten (Ti, 100) zur Übertragung von Datenpaketen (10) über ein Netzwerk von einem Sender (S) zu einem Empfänger (E) über eine Kommunikationsverbindung (K) bestehend aus mindestens einem Übertragungsabschnitt (TSi), über den das Datenpaket (10) vom Sendeknoten (Ti) zu einem Empfangsknoten (Ri) übermittelt wird, umfassend
- eine Zuordnungseinheit (110), die derart ausgebildet ist, eine Sicherheitsinformation (SIi), die Information über eine bei der Übertragung des Datenpakets (10) über einen benachbarten Übertragungsabschnitt (TSi) angewandte kryptographische Schutzfunktion umfasst, dem Datenpaket (10) zuzuordnen und
- eine Sendeeinheit (120), die derart ausgebildet ist, das Datenpaket (10) mit der zugeordneten Sicherheitsinformation (SIi) an einen nachfolgenden Empfangsknoten (Ri) zu übermitteln.

14. Empfangsknoten (Ri, 200) zur Übertragung von Datenpaketen (10) über ein Netzwerk von einem Sender (S) zu einem Empfänger (E) über eine Kommunikationsverbindung (K) bestehend aus mindestens einem Übertragungsabschnitt (TSi), über den das Datenpaket (10) von einem Sendeknoten (Ti, 100) zum Empfangsknoten (Ri, 200) übermittelt wird, umfassend
- eine Empfangseinheit (210), die derart ausgebildet ist, das Datenpaket (10) zu empfangen,
- eine Überprüfungseinheit (220), die derart ausgebildet ist, die Sicherheitsinformation (SIi) gegenüber einer vorgegebenen Richtlinie zu überprüfen, und
- eine Bereitstellungseinheit (230), die derart ausgebildet ist, mindestens eine Maßnahme abhängig vom Prüfergebnis bereitzustellen.

15. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 11 durchzuführen.
